# FASCICULE DE BREVET EUROPEEN

(11) **EP 1 868 824 B1**
(45) Date de publication et mention de la délivrance du brevet: **17.08.2011**
(21) Numéro de dépôt: 06725327.8
(22) Date de dépôt: 27.03.2006
(51) Int. Cl.: B60B 25/12, B60B 25/14

(54) **SYSTEME DE VERROUILLAGE D'UN ANNEAU DE MONTAGE SUR UN MOYEU DE VEHICULE**
SYSTEM ZUR ARRETIERUNG EINES MONTAGERINGS AN EINER FAHRZEUGNABE
SYSTEM FOR LOCKING A MOUNTING RING ON A VEHICLE HUB

(30) Priorité: 05.04.2005 FR 0503395
(43) Date de publication de la demande: 26.12.2007
(73) Titulaire: Société de Technologie Michelin, 63000 Clermont-Ferrand (FR); Michelin Recherche et Technique S.A., 1763 Granges-Paccot (CH)
(72) Inventeur: DURIF, Pierre, F-63530 Enval (FR)
(74) Mandataire: Le Cam, Stéphane Georges Elie
(86) Numéro de dépôt international: PCT/EP2006/061058
(87) Numéro de publication internationale: WO 2006/106053

(56) Documents cités:
- WO-A-00/71365
- WO-A-03/064183
- FR-A- 2 087 770

## Description

L'invention concerne un système de verrouillage d'un anneau de montage sur un moyeu d'un véhicule, ledit anneau de montage étant destiné à recevoir un bourrelet d'un pneumatique, notamment de type « tubeless », c'est-à-dire un pneumatique sans chambre à air.

Un tel ensemble de montage est plus particulièrement destiné à l'équipement de véhicules lourds de type Génie Civil par exemple, tels que ceux utilisés dans les mines.

Les réalisations usuelles des ensembles roulants sont de deux types en ce qui concerne les jantes. Ils sont réalisés soit avec des jantes dites à base creuse, possédant des sièges tronconiques inclinés par rapport à l'axe de rotation de l'ensemble d'un angle de 5° ou de 15°, soit avec des jantes à fond plat ou pratiquement plat ayant des sièges inclinés soit à 0°, soit à 5° par rapport à l'axe de rotation.

Les jantes dites à base creuse comportent une gorge de montage dont le diamètre est nettement inférieur au diamètre nominal de la jante. Ce diamètre intérieur de la jante est considéré par les utilisateurs comme trop petit, car il ne permet pas de choisir par exemple des tambours de freins de dimensions adaptées à un freinage efficace des véhicules de plus en plus puissants par rapport à leurs poids.

De ce fait, lesdites jantes sont couramment employées pour les montage et roulage par exemple des pneumatiques de Tourisme et/ou Poids-Lourds, mais le sont beaucoup moins et parfois pas du tout pour les autres types de véhicules, tels que, par exemple, les engins de chantier et Génie Civil.

Pour le montage de pneumatiques, notamment de type "tubeless", une jante à fond plat nécessite la présence d'au moins un anneau latéral amovible, d'un anneau de verrouillage et d'un joint d'étanchéité, et évidemment du fond de jante muni d'un rebord fixe du côté opposé au côté où les pièces sont amovibles. En effet, les dimensions des roues des véhicules et celles des pneumatiques et notamment la raideur des zones basses nécessitent que lesdites roues soient réalisées en plusieurs parties pour permettre le montage du pneumatique sur une jante. Il faut donc au minimum trois pièces. Dans la majorité des cas, le nombre de pièces nécessaires est supérieur à trois et peut atteindre parfois six pièces pour les grosses dimensions de pneumatique, sans compter les pièces nécessaires à la fixation des roues sur le véhicule. Exception faite des joints d'étanchéité en caoutchouc, les pièces d'une jante sont métalliques, et en conséquence lourdes, encombrantes, et difficiles à manutentionner. Il s'ensuit que les montage et démontage de pneumatiques de grande et très grande dimension constituent des opérations difficiles et longues. La mise en place et/ou l'enlèvement d'une roue équipée d'un tel pneumatique requièrent l'immobilisation du véhicule ou de l'engin pendant une durée non négligeable et donc nuisible à la productivité recherchée dans l'utilisation de ces véhicules.

La demande de brevet WO 00/71365 a décrit une technique permettant de simplifier le montage des pneumatiques, ceux-ci étant montés directement sur le moyeu, faisant alors office de jante. Des anneaux de montage indépendants jouent le rôle des sièges de jante et sont maintenus en place par des anneaux de blocage qui se solidarisent au moyeu du fait notamment de profils complémentaires. Selon cette technique, l'anneau de verrouillage est composé d'un mélange de caoutchouc vulcanisé renforcé par et enrobant un anneau de renforcement circonférentiellement élastique et radialement résistant à la compression.

Une telle technique est tout à fait intéressante puisqu'elle permet d'éliminer les phases de montage sur une jante ainsi que la fixation d'une roue sur le véhicule, les pneumatiques étant directement montés sur le moyeu par l'intermédiaire des anneaux de montage et anneaux de verrouillage. En outre, le nombre d'éléments étant fortement diminué les phases de manutention de ces éléments sont simplifiées.

Les essais réalisés avec ce type de technique ont mis en évidence que l'anneau de verrouillage, qui outre sa fonction de verrouillage du système est un élément qui intervient dans les passages de couple, freineur ou moteur, subit des efforts qui conduisent à une usure. L'anneau de verrouillage qui présente en surface un mélange de caoutchouc pour conférer des propriétés d'élasticité et permettre une maîtrise des coefficients de frottement notamment entre le moyeu du véhicule et l'anneau de verrouillage conduit en effet dans son utilisation à une usure de sa partie extérieure qui vient au contact d'une part du moyeu et d'autre part d'un anneau de montage, tous deux métalliques. Cette usure se traduit par une nécessité de changer l'anneau de verrouillage à chaque changement de pneumatique. La nature complexe de cet élément composé d'un mélange de caoutchouc enrobant un élément annulaire de renforcement résistant à la compression et la nécessité de le changer périodiquement conduisent à des coûts supplémentaires pour l'utilisateur.

Les inventeurs se sont ainsi donnés pour mission de perfectionner la technique présentée dans le document WO 00/71365 et notamment de limiter les coûts liés au fonctionnement et à la maintenance de cette technique.

Ce but a été atteint selon l'invention par un système de verrouillage d'un anneau de montage sur un moyeu d'un véhicule, ledit anneau de montage étant destiné à recevoir un bourrelet d'un pneumatique dans un ensemble de montage dudit pneumatique sur ledit moyeu d'un véhicule, ledit système de verrouillage étant constitué d'un anneau de verrouillage et d'un intercalaire polymérique destiné à être mis en place entre le moyeu et l'anneau de verrouillage.

Il faut entendre par intercalaire polymérique un intercalaire constitué essentiellement et notamment pour majorité d'au moins un mélange polymérique.

Le mélange polymérique est avantageusement un mélange de caoutchouc vulcanisé, c'est-à-dire un mélange d'élastomère(s), de charges renforçantes et d'additifs bien connus que l'on vulcanise à une certaine température.

L'intercalaire polymérique présente avantageusement un module sécant d'élasticité sous un allongement relatif de 10 % d'au moins 1 MPa, permettant notamment de faciliter sa mise en place sur le moyeu.

Les inventeurs ont su mettre en évidence au cours de leurs essais que les limitations du passage de couple entre le moyeu et le pneumatique pouvait être attribué au glissement entre le moyeu et le système de verrouillage de l'anneau de montage. En effet, des études, consistant à diminuer les coefficients de frottement des matériaux, ont montré que les glissements étaient essentiellement observés au niveau du contact entre l'anneau de verrouillage et le moyeu. Ce phénomène peut notamment s'expliquer par le rayon moyen de la zone de contact entre le moyeu et l'anneau de verrouillage inférieur au rayon moyen de la zone de contact entre l'anneau de verrouillage et l'anneau de montage ; Cette différence de rayon moyen et par conséquent de surface de contact donc de surface de frottement entre les différentes zones de passage de couple est compensée conformément à l'invention par un choix approprié des coefficients de frottement et notamment par l'utilisation d'un intercalaire polymérique entre le moyeu et l'anneau de verrouillage.

Le système de verrouillage ainsi réalisé selon l'invention permet notamment lors d'un changement de pneumatique de changer simultanément les intercalaires polymériques associés à chacun des anneaux de verrouillages, ceux-ci pouvant être endommagées et par contre de conserver les anneaux de verrouillages pour une nouvelle utilisation.

Selon un mode de réalisation préféré de l'invention, l'anneau de verrouillage est réalisé en un matériau incompressible.

Il faut entendre par anneau incompressible ou radialement résistant à la compression un anneau dont la dimension radiale maximale de sa section transversale, c'est-à-dire la plus grande distance radiale entre deux points du contour de ladite section situés sur une perpendiculaire à l'axe de rotation de la jante, est diminuée sous effort d'au plus 2 %. L'anneau peut par exemple être un anneau métallique.

Un anneau de verrouillage incompressible pourra a priori être utilisés pendant toute la durée de vie du véhicule.

L'anneau de verrouillage est avantageusement circonférentiellement élastique. Il faut entendre par anneau circonférentiellement élastique un anneau dont le développement circonférentiel est susceptible de s'allonger d'au moins 3 % sous un effort d'au plus 50 daN, et revenant à son état initial lorsque l'effort est supprimé. L'anneau de verrouillage autorise ainsi une manipulation simplifiée pour sa mise en place dans l'ensemble de montage tout en assurant un serrage sur l'intercalaire polymérique et sur le moyeu du véhicule.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Selon un mode de réalisation avantageux de l'invention, l'anneau de verrouillage est constitué d'un assemblage de plusieurs éléments unitaires, de préférence identiques, et reliés entre eux pour former ledit anneau. Une telle réalisation permet notamment une manipulation simplifiée et un transport simplifié de l'anneau de verrouillage, les éléments unitaires pouvant être manipulés indépendamment les uns des autres.

Avantageusement encore, chaque élément unitaire est tel qu'il correspond à un secteur compris entre 5 et 60° de l'anneau de verrouillage lorsque celui-ci est mis en place dans l'ensemble de montage du pneumatique sur le moyeu du véhicule. L'anneau de verrouillage, lorsqu'il est mis en place dans l'ensemble de montage d'un pneumatique sur un moyeu, vient en partie dans un évidement prévu sur le moyeu. Cet évidement comporte une partie axialement extérieure qui présente une pente permettant notamment le passage de couple. La position de l'anneau de verrouillage peut varier légèrement axialement sur ladite pente de l'évidemment durant le montage du pneumatique. Un élément unitaire correspondant à un secteur compris entre 5 et 60° peut être réalisé avec une courbure longitudinale telle, que l'élément unitaire n'altère pas l'intercalaire polymérique quelle que soit la position dudit élément unitaire sur la pente de l'évidement, et donc le rayon sur lequel il se trouve. Des éléments de longueur plus importante avec une courbure donnée peuvent dans certaines positions prendre appui sur l'intercalaire polymérique par l'intermédiaire de leurs extrémités et donc risquer d'altérer celle-ci par des pressions locales élevées. Lorsque les éléments unitaires sont métalliques, chaque élément unitaire correspond avantageusement à un secteur compris entre 5 et 30°.

Une réalisation préférée de l'invention prévoit que les éléments unitaires sont reliés entre eux par des éléments supplémentaires comportant des moyens d'allongement associés à une force de rappel élastique. Une telle réalisation permet de conférer une élasticité à l'anneau de verrouillage et ainsi d'assurer une répartition homogène de pression sur l'ensemble de la périphérie dudit élément.

Un anneau de verrouillage conforme à l'invention, est considéré comme ayant au moins deux parois : une paroi radialement intérieure et une paroi radialement extérieure, lesdites deux parois pouvant être réunies par des parois latérales quasi-perpendiculaires à la direction de l'axe de rotation. La paroi radialement intérieure a une forme qui est semblable à la forme ou profil des évidements ou gorges créés sur le moyeu de l'engin pour recevoir lesdits anneaux. Lesdits évidements peuvent avoir, vus en section méridienne, une forme quelconque mais ont préférentiellement une section méridienne dont la surface est quasi-triangulaire avec une base sur la génératrice du moyeu et avec deux côtés formant avec la direction parallèle à l'axe de rotation des angles aigus pouvant être compris entre 10° et 45°, les deux côtés étant réunis à l'opposé de ladite base par un sommet arrondi, pour minimiser les concentrations de contraintes et le risque de fissurations par fatigue. La quasi-hauteur dudit triangle, abaissée du sommet arrondi sur ladite base est préférentiellement comprise entre 10 et 45 mm. La paroi radialement intérieure de l'anneau de verrouillage a, en section méridienne, un profil identique au profil intérieur du quasi-triangle décrit ci-dessus.

La section méridienne de l'anneau de verrouillage, dans sa partie radialement intérieure, peut être de forme quelconque dans la mesure où une partie importante de la dimension radiale maximale de sa section méridienne est comprise dans la section triangulaire de l'évidement aménagé dans le moyeu. Il faut entendre par partie importante une distance radiale au moins égale à 25 % de la dimension radiale maximale de section de l'anneau de verrouillage.

Selon une variante de réalisation de l'invention, la section méridienne de l'anneau de verrouillage est, dans sa partie radialement intérieure, polygonale avec au moins deux côtés sensiblement parallèles aux deux côtés de la section triangulaire d'un évidement prévu sur le moyeu du véhicule, et au moins 25 % de la dimension radiale maximale de section méridienne de l'anneau étant comprise dans la section triangulaire dudit l'évidement aménagé dans le moyeu.

Avantageusement, la section méridienne de l'anneau de verrouillage est, dans sa partie radialement extérieure, polygonale avec au moins une partie tronconique dont la génératrice fait avec la direction de l'axe de rotation un angle pouvant être compris entre 15° et 45°. Ladite partie tronconique viendra lors du montage du pneumatique en regard de la partie tronconique de la paroi radialement intérieure de l'anneau de montage sur lequel sera monté le bourrelet du pneumatique.

Ledit anneau de verrouillage, en vue de faciliter les opérations de démontage du pneumatique, est avantageusement muni et/ou associé à un cordon ou sangle par exemple métallique permettant au moyen d'un effort de traction exercée sur ledit cordon de déloger l'anneau de l'évidement du moyeu.

Selon un mode de réalisation préféré, l'intercalaire polymérique s'étend au contact de la paroi radialement intérieure de l'anneau de verrouillage.

Une réalisation avantageuse de l'invention prévoit que l'intercalaire polymérique s'étend sur la paroi latérale axialement intérieur de l'anneau de verrouillage. Selon cette réalisation, l'intercalaire va notamment favoriser la mise en place de l'anneau de montage par gonflage en réalisant une étanchéité dite « primaire » qui permet d'initialiser le gonflage.

Avantageusement encore, l'intercalaire polymérique comporte un prolongement se positionnant au-delà de l'extrémité radialement extérieure de la paroi latérale axialement intérieur de l'anneau de verrouillage. Ce prolongement de l'intercalaire polymérique forme une protubérance circonférentielle qui assure l'étanchéité primaire au contact de l'anneau de montage avant gonflage et facilite encore le gonflage par formation de l'étanchéité dite « primaire ».

L'anneau de montage est un élément, par exemple métallique, composé d'un siège de jante, généralement tronconique mais pouvant être cylindrique, ou autre, ledit siège étant prolongé axialement et radialement à l'extérieur par un rebord de jante, ledit rebord pouvant être éventuellement indépendant du siège et être amovible par rapport audit siège. Ledit anneau de montage a avantageusement une paroi radialement intérieure formée d'au moins une partie tronconique dont la génératrice fait avec la direction de l'axe de rotation un angle compris entre 15° et 45°, alors que la paroi radialement extérieure, vue en section méridienne, est composée d'une part d'une génératrice tronconique faisant avec la direction de l'axe de rotation un angle pouvant être compris entre 0° et 16°, et d'autre part, prolongeant axialement à l'extérieur ladite génératrice par l'intermédiaire d'un arc de cercle, de la courbe représentative du profil axialement intérieur et radialement extérieur du rebord de jante. Ladite courbe est dans tous les cas avantageusement située radialement à l'extérieur et axialement à l'intérieur d'un segment de droite joignant le point d'intersection de ladite courbe avec la génératrice tronconique ci-dessus et le point de ladite courbe le plus éloigné de l'axe de rotation. Ainsi ladite courbe peut être formée d'un arc de cercle tangent à l'arc de cercle de liaison entre la génératrice tronconique et la courbe. Elle peut aussi être formée d'un segment de droite perpendiculaire ou non à l'axe de rotation, tangent radialement à l'intérieur à l'arc de liaison ci-dessus et radialement à l'extérieur à un deuxième arc de cercle de manière à obtenir la courbe désirée. Les anneaux de montage peuvent être indépendants du pneumatique et plus particulièrement des bourrelets dudit pneumatique. De manière à faciliter et à accélérer les opérations de montage et de démontage, ainsi que les diverses manutentions, les anneaux de montage avec sièges et rebords font partie intégrante du pneumatique au même titre, par exemple, que les tringles ; lesdits anneaux peuvent être rendus solidaires des bourrelets du pneumatique par un emmanchement à la presse sans possibilité de détachement. Un tel principe est décrit dans le brevet FR 2 087 770 de la demanderesse.

Solidaires on non des bourrelets du pneumatique, et en vue de permettre une manutention plus aisée des éléments à mettre en place, les anneaux de montage sont avantageusement munis dans leurs parties axialement intérieures d'un système de levage, par exemple à coussin d'air, qui permet d'avoir et de conserver pendant les opérations de montage un espace libre constant circonférentiellement entre le moyeu et la partie radialement intérieure des anneaux, d'où un déplacement axial grandement amélioré. Ledit espace libre de 5 à 20 mm a aussi pour but de permettre l'engagement à vue sur le moyeu sans coincement de l'ensemble pneumatique-anneaux de montage. Une autre variante de réalisation de l'invention pour faciliter la mise en place des anneaux de montage, ainsi que des anneaux de verrouillage et/ou des pneumatiques, prévoit des variations de diamètre du moyeu. Selon cette variante de réalisation la distance radiale entre le moyeu et la partie radialement intérieure des anneaux et/ou des bourrelets du pneumatique est augmentée dans les zones axiales ou le contact n'est pas recherché, c'est-à-dire dans les zones où les évidements destinés à recevoir les anneaux de verrouillage ne sont pas présents.

D'autres détails et caractéristiques avantageux de l'invention ressortiront ci-après de la description d'un exemple de réalisation de l'invention en référence aux figures 1 à 4 qui représentent :
- figure 1, une représentation schématique en section méridienne d'un ensemble de montage d'un pneumatique sur un moyeu conformément à l'invention,
- figure 2, une représentation schématique en section méridienne du système de verrouillage selon l'invention,
- figure 3, une représentation schématique en section circonférentielle d'une partie de l'anneau de verrouillage selon un mode de réalisation de l'invention,
- figure 4, une représentation schématique en section circonférentielle d'une variante de réalisation d'un élément de jonction entre deux éléments unitaires.

Les figures ne sont pas réalisées à l'échelle pour en simplifier la compréhension.

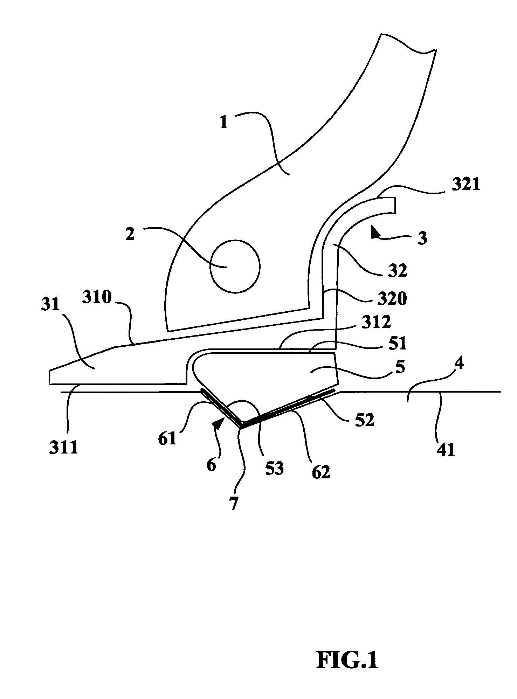

Sur la figure 1 n'est montré que le bourrelet 1 d'un pneumatique de grande dimension et destiné à rouler sur un engin de Génie Civil. Ledit bourrelet 1 est principalement renforcé par une tringle 2 autour de laquelle vient s'ancrer par enroulement l'armature de carcasse radiale, non représentée sur la figure 1, dudit pneumatique. Le bourrelet 1 a des parois radialement intérieure et axialement extérieure de formes et dimensions prévues pour être monté sur un anneau de montage 3, composé d'un siège tronconique 31 dont la génératrice 310, vue en section méridienne fait avec la direction de l'axe de rotation un angle d'environ 5°, génératrice axialement prolongée à l'extérieur par une paroi 320 d'un rebord de jante 32, ladite paroi 320 étant perpendiculaire à la direction de l'axe de rotation et se terminant axialement et radialement à l'extérieur par un arrondi 321. Quant à la paroi radialement intérieure de l'anneau conique de montage 3, elle est formée d'une première partie 311 essentiellement cylindrique et destinée à venir sur la surface cylindrique d'un moyeu 4 et d'une seconde partie 312 destinée à venir au contact de la paroi 51 radialement extérieure de l'anneau de verrouillage 5, ladite paroi 51 étant de forme complémentaire de la paroi 312. Ledit anneau de verrouillage 5 présente ainsi une surface radialement extérieure 51 destinée à être au contact de la surface radialement intérieure 312 de l'anneau de montage 3 et une surface radialement intérieure formées de deux génératrices 52, 53 qui vient s'insérer dans un évidement 6 du moyeu 4, la forme dudit évidement 6 étant complémentaire de la surface formées par les deux génératrices 52, 53 de l'anneau de verrouillage 5. Lors de l'assemblage, les deux génératrices 52, 53 viennent prendre appui sur les deux génératrices tronconiques 61, 62 de l'évidement 6 créé dans le moyeu 4, par l'intermédiaire d'un intercalaire polymérique 7. Les génératrices 61, 62 de l'évidement 6 forment avec le prolongement de la génératrice cylindrique 41 du moyeu 4 un triangle avec deux côtés 61, 62 et une base de largeur axiale suffisante pour qu'au moins le tiers de l'anneau de verrouillage 5 soit situé à l'intérieur du triangle défini ci-dessus, ce qui permet en combinaison avec la forme de l'évidement 6 et les formes radialement intérieure et extérieure de l'anneau de verrouillage 5, le blocage axial nécessaire et suffisant pour le maintien dudit anneau 5 dans toutes les conditions de roulage.

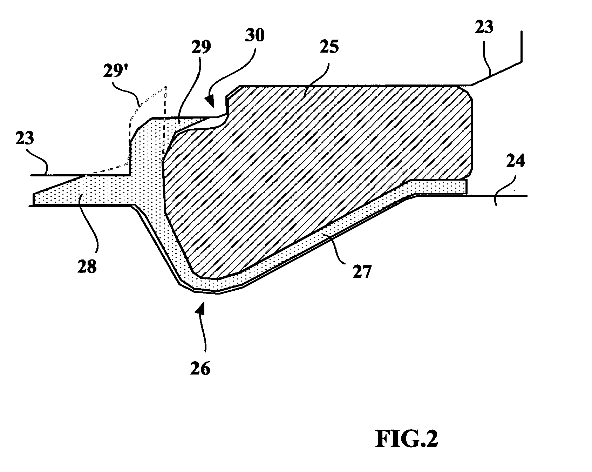

La figure 2 représente un système de verrouillage 20 constitué d'une part de l'anneau de verrouillage 25 et d'autre part de l'intercalaire polymérique 27. L'intercalaire polymérique 27 de forme annulaire est inséré entre l'évidement 26 prévu à cet effet dans le moyeu 24 et l'anneau de verrouillage 25.

Dans le cas représenté sur la figure 2, l'intercalaire 27 est prévu avec une partie 28 venant en appui sur une partie cylindrique du moyeu 24 de façon à bien positionner ledit intercalaire 27. La partie 28 de l'intercalaire 27 comporte encore une extrémité axialement intérieur tronconique pour faciliter le passage de l'anneau de montage 23.

L'intercalaire 27 comporte encore une extrémité en position 29 qui prolonge radialement à l'extérieur la partie de l'intercalaire 27 qui vient au contact de la paroi latérale axialement intérieure de l'anneau de verrouillage 25. Avant la mise en place de l'anneau de montage 23, cette extrémité de l'intercalaire 27 est avantageusement dans une position représentée par la zone hachurée 29'. Cette position 29' de cette extrémité de l'intercalaire 27 permet d'assurer l'étanchéité «primaire» au contact de l'anneau de montage 23 pour amorcer le gonflage de l'ensemble monté. La position 29 de cette extrémité est obtenue au cours du gonflage, l'anneau de montage venant en appui sur ledit intercalaire 27.

L'anneau de verrouillage et l'anneau de montage peuvent encore comporter des formes complémentaires dans une zone axialement intérieure 30 autorisant notamment un blocage axial en direction de l'extérieur de l'anneau de montage sur l'anneau de verrouillage. Ce blocage permet également de limiter l'écrasement de l'intercalaire 27 dans cette zone 30. Ce blocage, éventuellement encore associé à une prolongation axialement vers l'extérieur de l'anneau de verrouillage, peut encore permettre de contribuer au contrôle du positionnement de l'anneau de montage selon les directions radiales et axiales et notamment permettre d'éviter des risques de positionnements non homogènes au tour de roue.

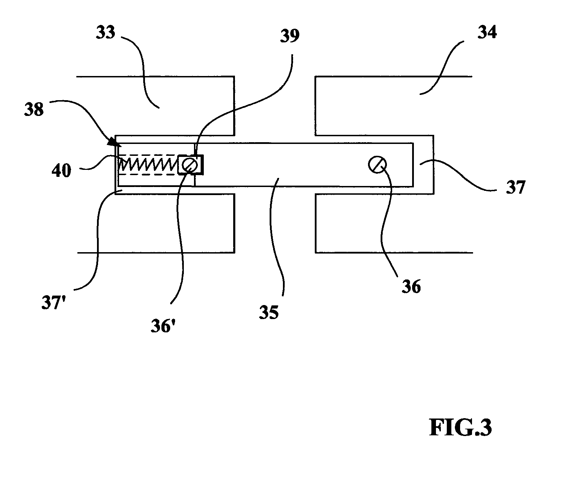

La figure 3 représente une partie d'un anneau de verrouillage et plus précisément deux des éléments unitaires 33, 34 qui le constituent, lesdits élément étant reliés par un élément de jonction 35.

L'anneau de verrouillage est ainsi avantageusement constitué d'un assemblage de plusieurs éléments unitaires 33, 34, de préférence identiques, et reliés entre eux. Cette réalisation permet notamment une manipulation simplifiée et un transport simplifié de l'anneau de verrouillage. L'association des éléments unitaires 33, 34 peut se faire sur site lors du montage du pneumatique sur un véhicule. La manutention et le transport de l'anneau de verrouillage s'en trouvent ainsi simplifiés.

Chaque élément unitaire 33, 34 correspond à un secteur compris entre 5 et 60° de l'anneau de verrouillage lorsque celui-ci est mis en place dans l'ensemble de montage du pneumatique sur le moyeu du véhicule. Cette faible dimension des éléments unitaires 33, 34 va permettre, lors de la mise en place du pneumatique sur un moyeu, d'éviter tous risques d'endommagement de l'intercalaire polymérique 7, 27. En effet, l'anneau de verrouillage 5, 25 qui vient en partie dans un évidement 6 du moyeu est amené notamment lors de la mise en place du pneumatique a évoluer sur la partie axialement extérieure dudit évidement 6, qui présente une pente. La position de l'anneau de verrouillage 5, 25 varie ainsi axialement sur ladite pente de l'évidemment durant le montage du pneumatique et donc avec un positionnement radial qui évolue. Un élément unitaire correspondant à un secteur compris entre 5 et 60° est réalisé avec une courbure longitudinale telle, que ledit élément unitaire n'altère pas l'intercalaire polymérique quelle que soit sa position sur la pente de l'évidement, et donc le rayon de courbure sur lequel il se trouve. Dans le cas d'une réalisation d'un élément unitaire métallique, la flexibilité de celui-ci étant faible, il correspond avantageusement à un secteur inférieur à 30°. La longueur de l'élément unitaire, c'est-à-dire la valeur du secteur auquel il correspond, sera définie en fonction de la nature du matériau utilisé. Quel que soit la nature du matériau constituant les éléments unitaires, ceux-ci peuvent encore comporter des entailles radiales orientées axialement et de faibles épaisseur pour autoriser un assouplissement desdits éléments unitaires selon la direction radiale et ainsi prévenir au mieux tous risques d'endommagement de l'enveloppe polymérique.

L'élément de jonction 35 qui relie les éléments unitaires 33, 34 comporte des moyens d'allongement associés à une force de rappel élastique. Sur la figure 3, l'élément 35 est ainsi réalisé comme une pièce de préférence métallique fixé de part et d'autre, aux points 36, 36' à chacun des éléments 33, 34. La fixation se fait par tous moyens connus de l'homme du métier. Avantageusement, l'élément 35 pénètre dans des renfoncements 37, 37' de chacun des éléments 33, 34 prévus à cet effet à leurs extrémités. L'élément 35 comporte en outre un système d'allongement 38 avec une force de rappel élastique. Ce système 38 est par exemple, comme représenté sur la figure 3, réalisé par une partie mobile 39 selon la direction circonférentielle, ladite partie mobile étant associée au point de fixation 36'. Le déplacement de cette partie 39 permet d'augmenter la distance entre les deux éléments 33, 34 et correspond ainsi à un allongement circonférentiel de l'anneau de verrouillage 5, 25. Dans son déplacement, la partie mobile 39 comprime un ressort 40 qui crée une force de rappel et confère donc un caractère élastique à l'allongement circonférentiel ci-dessus décrit de l'anneau de verrouillage.

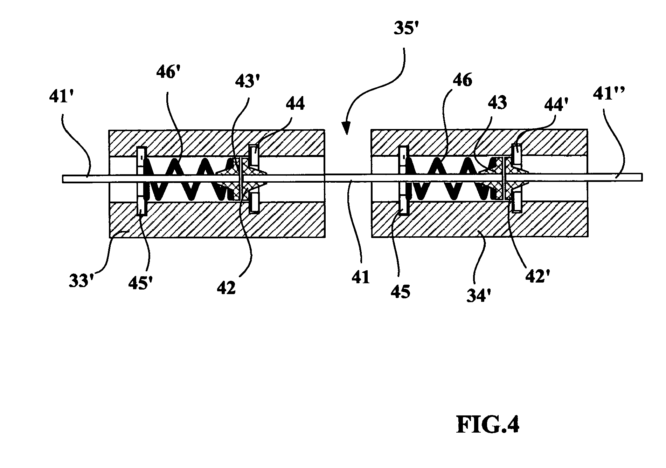

La figure 4 représente, selon une section circonférentielle et comme dans le cas de la figure 3, une partie d'un anneau de verrouillage et plus précisément deux des éléments 33', 34' qui le constituent, lesdits élément étant reliés par un élément de jonction 35'. L'élément de jonction 35' comporte des moyens d'allongement associés à une force de rappel élastique ; il est notamment constitué d'un câble 41, 41', 41", de préférence métallique, d'éléments de fixation du câble 42, 43, 42', 43', et de moyens de blocages 44, 45, 44', 45' des éléments de fixation au sein des éléments unitaires 33', 34'. Un ressort 46, 46' est avantageusement intercalé entre l'élément de fixation 43, 43' et le moyen de blocage 45, 45' pour fournir une force de rappel en cas d'extension circonférentielle de l'anneau de verrouillage. Les éléments de fixation du câble 42, 43, 42', 43' sont par exemple sertis aux câbles. Les moyens de blocages 44, 45, 44', 45' sont tout élément connu de l'homme du métier et sont avantageusement introduits par l'extérieur des éléments unitaires 33', 34' ; ils ont une forme telle qu'ils peuvent retenir les éléments de fixation du câble 42, 43, 42', 43' tout en ne faisant pas obstacle au passage du câble 41, 41', 41". Les éléments unitaires 33', 34' comportent un conduit traversant selon la direction circonférentielle, par exemple de section circulaire et qui présente le diamètre des éléments de fixation 43, 43', comme représenté sur la figure 4.

Quel que soit le mode de réalisation de l'élément de jonction 35, 35' tel que ceux représentés à titre d'exemples sur les figures 3 et 4, le même type d'élément de fixation peut être utilisé entre tous les éléments unitaires formant l'anneau de verrouillage. L'invention prévoit toutefois selon certaines variantes de réalisation de réaliser la dernière jonction, c'est-à-dire le dernier assemblage entre deux éléments unitaires conduisant à un élément annulaire continu, avec un élément de jonction simplifié ne comportant éventuellement pas de moyens d'allongement associés à une force de rappel élastique ; il s'agit par exemple d'une pièce mécanique de type cavalier qui vient s'insérer dans des encoches prévues à cet effet sur chaque extrémité des deux derniers éléments unitaires à associer pour former l'anneau de verrouillage.

La faible dimension des éléments unitaires 33, 34, le fait qu'ils sont avantageusement choisis tous identiques et qu'ils sont reliés par des éléments de jonctions 35, 35' également tous identiques et, présentant notamment des forces de rappel identiques, permettent d'obtenir une répartition homogène de la pression sur le moyeu et donc d'une part d'optimiser le montage du pneumatique sur le moyeu et, d'autre part, d'optimiser le fonctionnement du pneumatique notamment en ce qui concerne les passages de couple.

L'invention telle qu'elle vient d'être décrite notamment en référence aux exemples de réalisation ne doit pas être comprise comme étant limitée à ces exemples. Bien que restant dans le champ d'application de l'invention, les différents éléments constitutifs de l'ensemble de montage du pneumatique peuvent présenter des variantes de réalisation.

Le moyeu peut par exemple comporter une zone présentant un diamètre supérieur à son diamètre moyen par exemple pour laisser place à un dispositif de freinage. Cette zone de diamètre plus important pourra avantageusement être prévu sous la zone de mise en place du bourrelet axialement intérieur d'un pneumatique. Les anneaux de montage et éventuellement les anneaux de verrouillage destinés à être associés à chacun des bourrelets d'un pneumatique peuvent alors présenter des sections méridiennes différentes ; il est alors entendu que la zone formant le site de réception des bourrelets du pneumatique reste de préférence semblable pour les deux anneaux de montage de sorte que la conception du pneumatique reste classique et notamment symétrique.

## Revendications

1. Système de verrouillage d'un anneau de montage (31) sur un moyeu d'un véhicule, ledit anneau de montage étant destiné à recevoir un bourrelet (1) d'un pneumatique dans un ensemble de montage dudit pneumatique sur ledit moyeu d'un véhicule, **caractérisé en ce que** ledit système de verrouillage est constitué d'un anneau de verrouillage (5,25) et d'un intercalaire polymérique (7,27).

2. Système de verrouillage selon la revendication 1, **caractérisé en ce que** l'anneau de verrouillage (5,25) est réalisé en un matériau incompressible.

3. Système de verrouillage selon la revendication 2, **caractérisé en ce que** l'anneau de verrouillage est métallique.

4. Système de verrouillage selon l'une des revendications 1 à 3, **caractérisé en ce que** l'intercalaire polymérique (7,27) s'étend au contact d'au moins la paroi radialement intérieure de l'anneau de verrouillage.

5. Système de verrouillage selon la revendication 4, **caractérisé en ce que** l'intercalaire polymérique s'étend sur la paroi latérale axialement intérieur de l'anneau de verrouillage.

6. Système de verrouillage selon la revendication 5, **caractérisé en ce que** l'intercalaire polymérique comporte un prolongement se positionnant au-delà de l'extrémité radialement extérieure de la paroi latérale axialement intérieur de l'anneau de verrouillage.

7. Système de verrouillage selon l'une des revendications précédentes, **caractérisé en ce que** l'anneau de verrouillage est constitué d'un assemblage de plusieurs éléments unitaires, de préférence identiques, et reliés entre eux pour former ledit anneau de verrouillage.

8. Système de verrouillage selon la revendication 7, **caractérisé en ce que** chaque élément unitaire est tel qu'il correspond à un secteur compris entre 5 et 60° de l'anneau de verrouillage lorsque celui-ci est mis en place dans l'ensemble de montage du pneumatique sur le moyeu du véhicule.

9. Système de verrouillage selon la revendication 7 ou 8, **caractérisé en ce que** les éléments unitaires sont reliés entre eux par des éléments supplémentaires comportant des moyens d'allongement associés à une force de rappel élastique.

10. Système de verrouillage selon l'une des revendications 7 à 9, **caractérisé en ce que** la section méridienne de l'anneau de verrouillage (25) est, dans sa partie radialement intérieure, polygonale avec au moins deux côtés sensiblement parallèles aux deux côtés de la section triangulaire d'un évidement prévu sur le moyeu du véhicule, et au moins 25 % de la dimension radiale maximale de section méridienne de l'anneau étant comprise dans la section triangulaire dudit l'évidement aménagé dans le moyeu.

11. Système de verrouillage selon la revendication 10, **caractérisé en ce que** la section méridienne de l'anneau de verrouillage est, dans sa partie radialement extérieure, polygonale avec au moins une partie tronconique dont la génératrice fait avec la direction de l'axe de rotation un angle pouvant être compris entre 15° et 45°.

## Claims

1. Locking system for a ring (31) for mounting on a hub of a vehicle, the said mounting ring being intended to receive a bead (1) of a tyre in an assembly for mounting the said tyre on the said hub of a vehicle, **characterized in that** the said locking system consists of a locking ring (5, 25) and a polymeric insert (7, 27).

2. Locking system according to Claim 1, **characterized in that** the locking ring (5, 25) is made of an incompressible material.

3. Locking system according to Claim 2, **characterized in that** the locking ring is made of metal.

4. Locking system according to one of Claims 1 to 3, **characterized in that** the polymeric insert (7, 27) extends in contact with at least the radially inner wall of the locking ring.

5. Locking system according to Claim 4, **characterized in that** the polymeric insert extends along the axially inner side wall of the locking ring.

6. Locking system according to Claim 5, **characterized in that** the polymeric insert includes an extension that is positioned beyond the radially outer end of the axially inner side wall of the locking ring.

7. Locking system according to one of the preceding claims, **characterized in that** the locking ring consists of a collection of several, preferably identical, individual elements joined together to form the said locking ring.

8. Locking system according to Claim 7, **characterized in that** each individual element is such that it corresponds to a sector representing between 5 and 60° of the locking ring when the latter is in place in the assembly for mounting the tyre on the hub of the vehicle.

9. Locking system according to Claim 7 or 8, **characterized in that** the individual elements are joined together by additional elements comprising elongating means associated with an elastic restoring force.

10. Locking system according to one of Claims 7 to 9, **characterized in that** the meridian section of the locking ring (25) is, in its radially inner part, polygonal with at least two sides substantially parallel to the two sides of the triangular section of a recess made on the hub of the vehicle, and at least 25% of the maximum radial dimension of the meridian section of the ring lies within the triangular section of the said recess formed in the hub.

11. Locking system according to Claim 10, **characterized in that** the meridian section of the locking ring is, in its radially outer part, polygonal with at least one tapered part the generatrix of which makes an angle that may range between 15° and 45° with respect to the direction of the axis of rotation.

## Patentansprüche

1. System zur Verriegelung eines Montagerings (31) auf einer Fahrzeugnabe, wobei der Montagering dazu bestimmt ist, einen Wulst (1) eines Luftreifens in einer Einheit zur Montage des Luftreifens auf die Fahrzeugnabe aufzunehmen, **dadurch gekennzeichnet, dass** das Verriegelungssystem aus einem Verriegelungsring (5, 25) und aus einer Polymer-Zwischenlage (7, 27) besteht.

2. Verriegelungssystem nach Anspruch 1, **dadurch gekennzeichnet, dass** der Verriegelungsring (5, 25) aus einem inkompressiblen Material hergestellt wird.

3. Verriegelungssystem nach Anspruch 2, **dadurch gekennzeichnet, dass** der Verriegelungsring aus Metall ist.

4. Verriegelungssystem nach einem der Ansprüche 1 bis 3, **dadurch gekennzeichnet, dass** die Polymer-Zwischenlage (7, 27) sich in Kontakt mit mindestens der radial inneren Wand des Verriegelungsrings erstreckt.

5. Verriegelungssystem nach Anspruch 4, **dadurch gekennzeichnet, dass** die Polymer-Zwischenlage sich auf der axial inneren Seitenwand des Verriegelungsrings erstreckt.

6. Verriegelungssystem nach Anspruch 5, **dadurch gekennzeichnet, dass** die Polymer-Zwischenlage eine Verlängerung aufweist, die jenseits des radial äußeren Endes der axial inneren Seitenwand des Verriegelungsrings positioniert wird.

7. Verriegelungssystem nach einem der vorhergehenden Ansprüche, **dadurch gekennzeichnet, dass** der Verriegelungsring aus einem Zusammenbau mehrerer, vorzugsweise gleicher Einzelelemente besteht, die miteinander verbunden werden, um den Verriegelungsring zu formen.

8. Verriegelungssystem nach Anspruch 7, **dadurch gekennzeichnet, dass** jedes Einzelelement derart ist, dass es einem Sektor entspricht, der zwischen 5 und 60° des Verriegelungsrings liegt, wenn dieser in die Einheit zur Montage des Luftreifens auf die Fahrzeugnabe eingesetzt ist.

9. Verriegelungssystem nach Anspruch 7 oder 8, **dadurch gekennzeichnet, dass** die Einzelelemente miteinander durch zusätzliche Elemente verbunden sind, die Dehnungseinrichtungen aufweisen, die einer elastischen Rückstellkraft zugeordnet sind.

10. Verriegelungssystem nach einem der Ansprüche 7 bis 9, **dadurch gekennzeichnet, dass** der Meridianquerschnitt des Verriegelungsrings (25) in seinem radial inneren Bereich polygonal ist, mit mindesten zwei zu den zwei Seiten des Dreiecksquerschnitts einer an der Nabe des Fahrzeugs vorgesehenen Aussparung parallelen Seiten, und mindestens 25 % der maximalen radialen Abmessung des Meridianquerschnitts des Rings in dem Dreiecksquerschnitt der in der Nabe angeordneten Aussparung enthalten sind.

11. Verriegelungssystem nach Anspruch 10, **dadurch gekennzeichnet, dass** der Meridianquerschnitt des Verriegelungsrings in seinem radial äußeren Bereich polygonal mit mindestens einem kegelstumpfförmigen Bereich ist, dessen Mantellinie mit der Richtung der Drehachse einen Winkel bildet, der zwischen 15° und 45° liegen kann.
